# EUROPÄISCHE PATENTSCHRIFT

(11) **EP 1 394 311 B1**
(45) Veröffentlichungstag und Bekanntmachung des Hinweises auf die Patenterteilung: **23.11.2005**
(21) Anmeldenummer: 03006588.2
(22) Anmeldetag: 24.03.2003
(51) Int. Cl.: D05C 1/02, B29C 63/18, H02G 15/18

(54) **Schrumpfender Geflechtschlauch**
Shrinkable braided sleeve
Manchon tressé rétractable

(30) Priorität: 22.03.2002 DE 10212922
(43) Veröffentlichungstag der Anmeldung: 03.03.2004
(73) Patentinhaber: Iprotex GmbH & Co. KG, 95213 Münchberg (DE)
(72) Erfinder: Piwonski, Timo, 96364 Marktrodach (DE)
(74) Vertreter: Fischer, Matthias

(56) Entgegenhaltungen:
- EP-A- 0 268 838
- FR-A- 2 784 447
- US-A- 3 669 157
- US-A- 4 034 153
- US-A- 4 820 561
- US-B1- 6 265 039

## Beschreibung

Die vorliegende Erfindung betrifft einen textilen Geflechtschlauch mit ersten Fäden und sich mit den ersten Fäden kreuzenden zweiten Fäden.

Aus dem US-Patent Nr. 4,820,561 von Pithouse et al. ist ein in der Dimension rückstellbarer Gegenstand in einer Verbundstruktur eines wärmerückstellbaren Gewebes mit einer Polymermatrix bekannt, das z.B. zur Ummantelung von Kabelspleißstellen und dergleichen eingesetzt wird, um die entsprechende Kupplungsstelle gegen Feuchtigkeit, Chemikalien sowie Beschädigung durch Tiere zu schützen. Hierbei wird das Ummantelungsmaterial mit einer Beschichtung aus adhäsivem Material versehen, welches bei der Montage zu dem zu schützenden Gegenstand zeigend montiert wird. Die Beschichtung des gesamten Mantelmaterials mit einem adhäsiven Gewebe ist aufwendig und kostspielig und macht die Ummantelung voluminös. Die hier gezeigte Ummantelung wird aus einem Flächengebilde zu einem rohrförmigen Gegenstand geformt und erst mit einem separaten Verschlußmittel zu einer geschlossenen Ummantelung geformt.

Aus dem US-Patent 4,576,666 von Harris et al. ist ein wärmerückstellbarer Gegenstand bekannt, der ebenfalls aus einem flächenmäßigen Gebilde zu einem Rohr geformt und mit einem Verschlußmittel versehen ist. Vor dem thermischen Schrumpfen des zu einem rohrförmigen Gebilde geformten Gewebes, muß ein Verschluß angebracht werden, der außerdem noch gegen die Außenseite des umhüllenden Gegenstands aufträgt und, sofern der zu umhüllende Gegenstand eine nicht geradlinige Form hat, unter Zug- oder Druckspannung steht, wobei in sollen Fällen die Umhüllung relativ sperrig wird.

Aus dem europäischen Patent EP 0 268 838 B1 (Verseidag) ist ein Flächengebilde aus Fasern, insbesondere als Verstärkungseinlage für Kunststoffteile bekannt. Dieses Flächengebilde kann für rohr- oder stangenförmige Bauteile schlauchförmig ausgebildet werden, zeichnet sich jedoch dadurch aus, daß die darin angeordneten Fäden nach Temperatureinwirkung zueinander Relativbewegungen durchführen können.

Es ist bekannt, textile Geflechtschläuche mit ersten Fäden und sich mit den ersten Fäden kreuzenden zweiten Fäden zur Montage auf sich längserstreckenden Gegenständen axial soweit zusammenzudrücken, daß sie ihr Innendurchmesser vergrößert, wobei die ersten Fäden und die sich mit ihnen kreuzenden zweiten Fäden, die sich im entspannten Zustand etwa unter 80 bis 90° kreuzen, sich nun - abhängig von der Anzahl gefachter Fäden - etwa unter bis zu fast 180° kreuzen. Die Geflechtschläuche lassen sich so einfach auf die sich längserstreckenden Gegenstände aufschieben. Nach dem Aufschieben bewegen sich die Fäden aufgrund der dem Geflecht eigenen Elastizität soweit wie möglich wieder in ihre Ausgangsstellung und umschließen den sich längserstreckenden Gegenstand. Das Zusammendrücken der Schläuche vor der Montage und das Aufschieben auf die sich längserstreckenden Gegenstände sind zeitraubende und mühsame Vorgänge. Dennoch ist eine zuverlässige, eindeutige und feste Lage der Schläuche auf den Gegenständen nicht gewährleistet.

Aus der WO 00/22216 ist ein Geflechtschlauch gemäß dem Oberbegriff von Anspruch 1 bekannt.

Die US 4,034,153 beschreibt einen elastischen Geflechtschlauch bestehend aus thermisch schrumpfbaren Garnen.

Es ist Aufgabe der vorliegenden Erfindung, einen textilen Geflechtschlauch mit ersten Fäden und sich mit den ersten Fäden kreuzenden zweiten Fäden vorzuschlagen, der auf Stangen, Schläuchen, Profilen und dergleichen einfach montiert werden und dort im wesentlichen unverrückbar fest angebracht werden kann und außerdem kostengünstig herzustellen ist.

Die Aufgabe wird gelöst mit einem Geflechtschlauch nach Anspruch 1. Der erfindungsgemäße Geflechtschlauch kann vorteilhafterweise sehr einfach auf sich längserstreckende Gegenstände aufgeschoben und durch Erwärmung unverrückbar festgelegt werden. Gegenüber der bisherigen Verfahrensweise bei der Montage von Geflechtschläuchen kann man nun einen etwas größeren Schlauchdurchmesser wählen und den Schlauch leicht aufschieben. Die aus hochschrumpfbarem Material bestehenden ersten Fäden ziehen sich zusammen, umklammern den zu ummantelnden Gegenstand und sitzen darauf fest.

Sofern nur eine Fadengruppe, also die ersten oder die zweiten Fäden aus hochschrumpfbarem Material bestehen, schrumpfen die Fäden der anderen Fadengruppe nicht, sondern "bauschen sich" zwischen den schrumpfenden Fäden etwas auf. Hierdurch ergibt sich ein vorteilhafter Nebeneffekt, nämlich daß um den ummantelten Gegenstand ein Abstandhalter gebildet ist.

Die Montage von Schlauchabschnitten beliebiger Länge "vor Ort" ist ebenso von Vorteil wie die platzsparende Lager- und Transporteignung des erfindungsgemäßen Geflechtschlauches.

In einer vorteilhaften Weiterbildung der Erfindung ist der Geflechtschlauch dadurch ausgezeichnet, daß die Schmelzkleberfäden geeignet sind, nach einer einmaligen Erhitzung auf eine bestimmte Temperatur, irreversibel auszuhärten. Bei Verwendung eines derartigen Geflechtschlauchs in einer Umgebung, die die zur Verklebung erforderliche Temperatur übersteigt, ist keine Gefahr gegeben, daß sich der erfindungsgemäße Geflechtschlauch aufgrund der hohen Temperatur von dem Gegenstand, den er schützen soll, lösen kann.

Durch die Ausgestaltung des erfindungsgemäßen Geflechtschlauches ergibt sich der außerordentliche Vorteil, daß beim Aufschrumpfen des Schlauches auf einen zu ummantelnden Gegenstand, das unter Zufuhr von Wärme durchgeführt wird, die im Geflechtschlauch eingelegten Schmelzkleberfäden gleichzeitig schmelzen und zwischen der Ummantelung und dem zu ummantelnden Gegenstand eine Klebeverbindung schaffen. Die hierdurch geschaffene Klebeverbindung zwischen dem erfindungsgemäßen Geflechtschlauch und dem Gegenstand kann in sehr kurzer Zeit und ohne großen zusätzlichen Wärmeaufwand erreicht werden, da der Schmelzkleber bereits beim Schrumpfungsprozeß schmilzt. Der Geflechtschlauch liegt nach dem Aufschrumpfungsvorgang unverrückbar auf dem Gegenstand fest. Ein weiterer besonderer Vorteil des erfindungsgemäßen Geflechtschlauchs besteht darin, daß die Schmelzkleberfäden schon beim Flechtvorgang des Schlauchs ohne großen Zusatzaufwand miteingelegt werden können. Es ist nicht, wie beim Stand der Technik diskutiert, ein zusätzlicher Arbeitsschritt für die Aufbringung eines adhäsiven Materials auf die Innenwand des Geflechtschlauchs erforderlich.

Weitere Merkmale und Vorteile der Erfindung ergeben sich aus den Unteransprüchen.

Die Erfindung wird nun unter Zuhilfenahme der Zeichnung anhand von Beispielen kurz erläutert.
- Fig. 1: zeigt in schematischer Darstellung in Draufsicht einen Abschnitt eines erfindungsgemäßen Geflechtschlauchs im entspannten Zustand.
- Fig. 2: zeigt den in Fig. 1 dargestellten Abschnitt im zusammengeschobenen Zustand.
- Fig. 3: zeigt schematisch ein Rohr mit einem darauf aufgeschobenen erfindungsgemäßen Geflechtschlauch im entspannten Zustand.
- Fig. 4: zeigt die Anordnung von Fig. 3 nach Erwärmung bzw. Abschluß des Schrumpfvorganges.

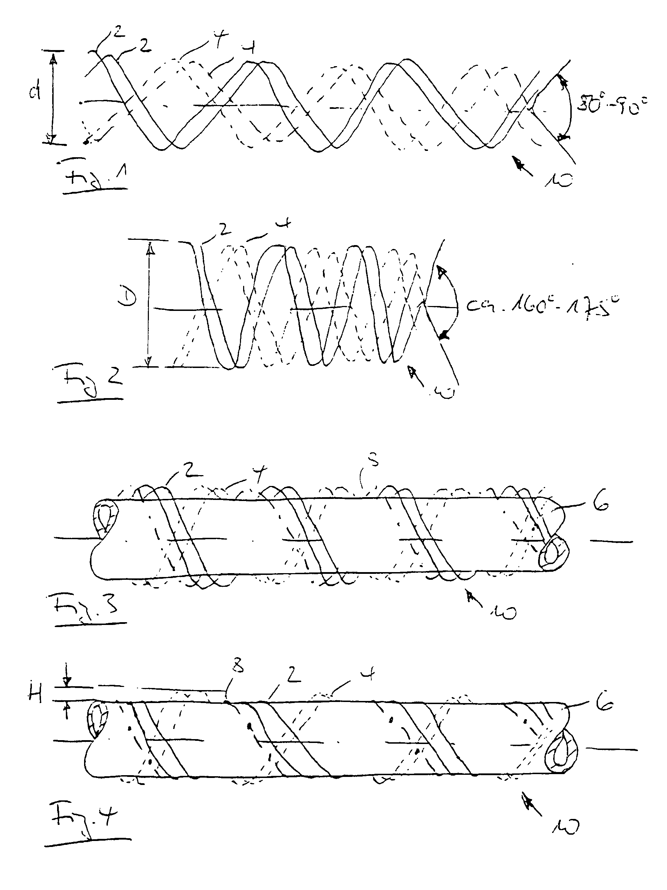

Fig. 1 zeigt in Draufsicht einen Abschnitt eines erfindungsgemäßen Geflechtschlauchs 10 im entspannten Zustand, mit ersten Fäden 2 und sich mit den ersten Fäden 2 kreuzenden (gestrichelt dargestellten) zweiten Fäden 4, wobei im vorliegenden Beispiel die ersten Fäden 2 aus hochschrumpfbarem Material bestehen. Hierzu eignet sich insbesondere ein thermoplastischer Werkstoff, wie zum Beispiel Polyolephinen (Polyester, LDPE, HDPE, LLDPE etc.) oder ein über die Verreckungsintensität modifiziertes Polyamid, wogegen für die zweiten Fäden 4 vorzugsweise Polyester-Material eingesetzt wird.

Der Durchmesser des Schlauches 10 in Fig. 1 beträgt d. Die Schlauchachse verläuft in Fig. 1 und in allen anderen Figuren quer zur Bildebene von links nach rechts. Der Übersicht halber werden hier nur einige der Fäden der beiden Fadengruppen gezeigt. In Wirklichkeit enthalten die hier beschriebenen Geflechtschläuche wesentlich mehr Fäden. Die in den Fig. 1 und Fig. 2 gezeigten spiralförmig verlaufenden Fäden sind so dargestellt, als wäre der Geflechtschlauch durchsichtig. Man sieht also die Fäden der Schlauch"rückseite" von innen. Die Fäden kreuzen sich im entspannten Zustand (Fig. 1) unter einem Winkel von etwa 80 bis 90°.

Fig. 2 zeigt den in Fig. 1 dargestellten Abschnitt im axial zusammengeschobenen Zustand. Die Fäden kreuzen sich unter einem Winkel von etwa 160 bis 175°. Der Durchmesser D des Schlauches 10 ist im zusammengeschobenen Zustand größer als der Durchmesser d (Fig. 1).

Fig. 3 zeigt ein Rohr 6 mit einem darauf aufgeschobenen erfindungsgemäßen Geflechtschlauch 10 im entspannten Zustand mit ersten Fäden 2 aus hochschrumpfbarem Material und sich mit den ersten Fäden 2 kreuzenden zweiten Fäden 4, die aus schrumpfarmem Material bestehen.

Wird die Konfiguration gemäß Fig. 3 erwärmt, schrumpfen die ersten Fäden 2, legen sich eng an das Rohr 6 an und halten den Geflechtschlauch sicher auf dem Rohr 6 fest. Die zweiten Fäden 4 schrumpfen dabei nicht mit, sondern bleiben gegenüber den ersten Fäden 2 gebauscht, so daß sie um das Rohr 6 weiter in einer Höhe H auftragen und damit gegenüber der Umgebung des Rohres 6 einen Abstandhalter darstellen. Im Ausführungsbeispiel gemäß den Fig. 3 und 4 ist beispielhaft noch ein (strichpunktiert dargestellter) Schmelzkleberfaden 8 gezeigt, der parallel zu ersten Fäden 2 verläuft und eingeflochten ist.

Soll der hier dargestellte erfindungsgemäße Geflechtschlauch auf einem zu ummantelnden Gegenstand aufgeschrumpft werden, wird er auf den Gegenstand aufgeschoben und dann beispielsweise mit Heißluft oder im Rahmen der Weiterbehandlung in einem Vulkanisationsprozeß unter Dampf und/oder Druckbeaufschlagung oder einem anderen geeigneten Verfahren erwärmt. Die thermoplastischen ersten Fäden 2 schrumpfen infolge der Erwärmung. Der Geflechtschlauch legt sich so eng wie möglich an den zu ummantelnden Gegenstand.

Um eine noch verbesserte Fixierung des Geflechtschlauchs am zu ummantelnden Gegenstand zu erreichen, insbesondere, wenn dieser eine geradlinige Form hat, werden zweckmäßigerweise Schmelzkleberfäden 8 in Form von Fäden, Bändern oder Folien in das Geflecht eingearbeitet.

Diese Schmelzkleberfäden werden bei der zuvor beschriebenen Erwärmung schmelzen und eine Adhäsion zwischen der Innenwand des Geflechtschlauchs und der Außenwand des zu ummantelnden Gegenstands schaffen und damit eine unverrückbare Ummantelung erzeugen.

Der in den Figuren 1 bis 4 dargestellte erfindungsgemäße Geflechtschlauch kann vorteilhafterweise mit geringstem Packungsvolumen als Rolle "in sich" aufgewickelt, gelagert und transportiert werden. Er wird bei Bedarf vor Ort in jede gewünschte Länge geschnitten, montiert und aufgeschrumpft. Der Kunde kann den erfindungsgemäßen Geflechtschlauch in großen Gebinden mit optimiertem Lagerplatzbedarf zwischenlagern und verarbeiten, im Einsatzfall auf Länge schneiden und verbauen. Vorteilhafterweise fällt hier außerdem nahezu kein Verschnitt an.

Sollte die Anforderung bestehen, z. B. auch einen fertig montierten Kabelbaum mit einem erfindungsgemäßen Geflechtschlauch zu umhüllen, läßt sich eine solche Umhüllung in vorteilhafter Weise durch ein Verfahren erreichen, das dadurch gekennzeichnet ist, daß der Geflechtschlauch entlang seiner Längsachse geöffnet wird und dann in geöffneter Form thermisch beaufschlagt wird, so daß er schrumpft. Die thermische Beaufschlagung kann dabei vor oder nach der Montage erfolgen.

Eine vorteilhafte Weiterbildung des erfindungsgemäßen Verfahrens besteht darin, daß der Geflechtschlauch entlang seiner Längsachse durch Kalt, Heiß- oder Ultraschallschneiden geöffnet wird, wobei die Schnittkanten insbesondere durch Verschweißen versiegelt werden. Damit ist eine schnelle Montage ohne irgendwelche störenden "Ausfransungen" an der Öffnungsstelle möglich.

## Patentansprüche

1. Textiler Geflechtschlauch (10) mit einer ersten Fadengruppe und mit einer, sich mit den ersten Fäden (2) der ersten Fadengruppe kreuzende zweite Fäden (4) enthaltenden, zweiten Fadengruppe, wobei wenigstens einige der Fäden (2; 4) wenigstens einer Fadengruppe aus hochschrumpfbarem Material bestehen und die Fäden (2; 4) multifile und/oder monofile Fäden sind, **gekennzeichnet durch** Schmelzkleberfäden (8) in Form von Fäden, Bändern oder Folien, die in dem Geflecht (10) parallel zu den ersten Fäden (2) und/oder den zweiten Fäden (4) verlaufen.

2. Geflechtschlauch nach Anspruch 1, **dadurch gekennzeichnet, daß** die Schmelzkleberfäden (8) nach einer einmaligen Erhitzung auf eine bestimmte Temperatur irreversibel ausgehärtet sind.

3. Geflechtschlauch nach Anspruch 1 oder 2, **dadurch gekennzeichnet, daß** die ersten Fäden (2) Polyolephinen (Polyester, LDPE, HDPE, LLDPE etc.) bestehen.

4. Verfahren zur Herstellung einer länglichen Umhüllung unter Verwendung eines Geflechtschlauchs nach einem der vorhergehenden Ansprüche, **dadurch gekennzeichnet, daß** der Geflechtschlauch entlang seiner Längsachse geöffnet wird und dann in geöffneter Form vor oder nach der Montage thermisch beaufschlagt wird, so daß er schrumpft.

5. Verfahren nach Anspruch 4, **dadurch gekennzeichnet, daß** der Geflechtschlauch entlang seiner Längsachse durch Kalt, Heiß- oder Ultraschallschneiden geöffnet wird, wobei die Schnittkanten insbesondere durch Verschweißen versiegelt werden.

## Claims

1. Textile braided tubing (10) comprising a first group of threads and a second group of threads containing second threads (4) intersecting the first threads (2) of said first group of threads, at least some of said threads (2; 4) of at least one group of threads being made of high-shrink material and said threads (2; 4) being multifil and/or monofil threads, **characterized by** hot-melt adhesive threads (8) in the form of threads, tapes or films running in said braid (10) parallel to said first threads (2) and/or said second threads (4).

2. The braided tubing as set forth in claim 1, **characterized in that** said hot-melt adhesive threads (8) after once-only heating are irreversibly cured to a certain temperature.

3. The braided tubing as set forth in claim 1 or 2, **characterized in that** said first threads are made of polyolephines (polyester, LDPE, HDPE, LLDPE, etc.).

4. A method of producing an elongated sleeving in making use of a braided tubing as set forth in any of the preceding claims, **characterized in that** said braided tubing is opened up along its longitudinal centerline and then thermally treated in its open form before or after assembly so that it shrinks.

5. The method as set forth in claim 4, **characterized in that** said braided tubing is opened along its longitudinal centerline by cold, hot or ultrasonic slitting, the cut edges being sealed particularly by fusion welding.

## Revendications

1. Manchon tressé en textile (10) comportant un premier groupe de fils ainsi qu'un second groupe de fils contenant de seconds fils (4) se croisant avec les premiers fils (2) du premier groupe de fils, au moins quelques fils (2; 4) d'au moins un groupe de fils consistant en matière hautement rétractable et les fils (2; 4) étant des fils multi-fils et/ou monofils, **caractérisé par** des fils de colle fusible (8) en forme de fils, bandes ou films qui s'étendent dans le tressage (10) parallèlement aux premiers fils (2) et/ou aux seconds fils (4).

2. Manchon tressé selon la revendication 1, **caractérisé en ce que** les fils de colle fusibles (8) sont irréversiblement durcis après un réchauffement unique à une température déterminée.

3. Manchon tressé selon les revendications 1 ou 2, **caractérisé en ce que** les premiers fils (2) consistent en polyoléfines (polyester, LDPE, HDPE, LLDPE etc.).

4. Procédé pour la fabrication d'un enrobage allongé par l'utilisation d'un manchon tressé selon l'une des revendications précédentes, **caractérisé en ce que** le manchon tressé est ouvert le long de son axe longitudinal et est ensuite soumis à la chaleur dans une forme ouverte avant ou après le montage de sorte qu'il se rétracte.

5. Procédé selon la revendication 4, **caractérisé en ce que** le manchon tressé est ouvert le long de son axe longitudinal par coupure à froid, à chaud ou aux ultrasons, les arêtes de coupe étant notamment scellées par soudage.
